# EUROPEAN PATENT APPLICATION

(11) **EP 4 250 217 A1**
(43) Date of publication of application: **27.09.2023**
(21) Application number: 22192118.2
(22) Date of filing: 25.08.2022
(51) Int. Cl.: G06Q 30/06, G06Q 50/10, G06V 20/00

(54) **INFORMATION PROCESSING APPARATUS, PROGRAM, AND INFORMATION PROCESSING METHOD**

(30) Priority: 22.03.2022 JP 2022045434
(71) Applicant: Fujifilm Business Innovation Corp., Tokyo 107-0052 (JP)
(72) Inventor: AKAMINE, Ryo, Yokohama (JP)
(74) Representative: Meissner Bolte Partnerschaft mbB

(57) **Abstract**

An information processing apparatus includes a processor configured to: receive first image data representing persons and objects excluding the persons; register a person represented by the first image data as an owner of an object represented by the first image data; receive second image data that represents an object serving as an identification target and owned by an owner that is not identified; and in accordance with the second image data and contents that are registered, identify the owner of the object serving as the identification target.

## Description

### Background

### (i) Technical Field

The present disclosure relates to an information processing apparatus, a program, and an information processing method.

### (ii) Related Art

Japanese Unexamined Patent Application Publication No. 2021-39784 discloses an apparatus that identifies, from an image representing a person, the person and a product purchased by the person.

### Summary

Accordingly, it is an object of the present disclosure to provide a method of identifying an owner of an object with an unidentified owner.

According to a first aspect of the present disclosure, there is provided an information processing apparatus including a processor configured to: receive first image data representing persons and objects excluding the persons; register a person represented by the first image data as an owner of an object represented by the first image data; receive second image data that represents an object serving as an identification target and owned by an owner that is not identified; and in accordance with the second image data and contents that are registered, identify the owner of the object serving as the identification target.

In the information processing apparatus of a second aspect of the disclosure in view of the first aspect, a second image based on the second image data is displayed on a display, and the processor is configured to cause the display to display information indicating the identified owner in superimposition on the second image.

In the information processing apparatus of a third aspect of the disclosure in view of one of the first and second aspects, the processor is configured to, in accordance with the second image data and the registered contents, identify, as the owner of the object serving as the identification target, a person having a certainty factor as the owner of the object serving as the identification target equal to or above a threshold.

In the information processing apparatus of a fourth aspect of the disclosure in view of the third aspect, the processor is configured to update the certainty factor in accordance with identification results that are based on one or more pieces of the second image data.

In the information processing apparatus of a fifth aspect of the disclosure in view one of the third and fourth aspects, the processor is configured to update the certainty factor in accordance with registration results that are based on one or more pieces of the first image data.

In the information processing apparatus of a sixth aspect of the disclosure in view of one of the first through fifth aspects, the processor is configured to, if a plurality of persons are represented by the first image data, register an owner of the object represented by the first image data, in accordance with a distance between each of the persons represented by the first image data and the object represented by the first image data.

In the information processing apparatus of a seventh aspect of the disclosure in view of the sixth aspect, the processor is configured to register, as the owner of the object represented by the first image data, a person at a location closest to the object represented by the first image data.

According to an eighth aspect of the present disclosure, there is provided a program causing a computer to execute a process for processing information, the process including: receiving first image data representing persons and objects excluding the persons; registering a person represented by the first image data as an owner of an object represented by the first image data; receiving second image data that represents an object serving as an identification target and owned by an owner that is not identified; and in accordance with the second image data and contents that are registered, identifying the owner of the object serving as the identification target.

According to a ninth aspect of the present disclosure, there is provided an information processing method including: receiving first image data representing persons and objects excluding the persons; registering a person represented by the first image data as an owner of an object represented by the first image data; receiving second image data that represents an object serving as an identification target and owned by an owner that is not identified; and in accordance with the second image data and contents that are registered, identifying the owner of the object serving as the identification target.

According to one of the first, eighth, and ninth aspects of the disclosure, an unidentified owner may be identified.

According to the second aspect of the disclosure, the user may recognize the owner of the object serving as the identification target.

According to one of the third through fifth aspects of the disclosure, a person more likely to be the owner is identified as the owner with a higher priority than a person less likely to be the owner.

According to one of the sixth and seventh aspects of the disclosure, if the first image data represents multiple persons, a person more likely to be the owner of the object is registered as the owner of the object.

### Brief Description of the Drawings

Exemplary embodiments of the present disclosure will be described in detail based on the following figures, wherein:
Fig. 1 is a block diagram illustrating a configuration of an information processing system;
Fig. 2 is a block diagram illustrating a configuration of a server;
Fig. 3 is a block diagram illustrating a hardware configuration of the server;
Fig. 4 is a block diagram illustrating a configuration of a terminal apparatus;
Fig. 5 is a block diagram illustrating a hardware configuration of the terminal apparatus;
Fig. 6 illustrates a property database (DB);
Fig. 7 is a flowchart illustrating a flow of a process that registers an object in the property DB;
Fig. 8 is a flowchart illustrating a flow of a process that identifies an owner of an object;
Fig. 9 illustrates a screen that displays information indicative of an owner; and
Fig. 10 illustrates a verification screen.

### Detailed Description

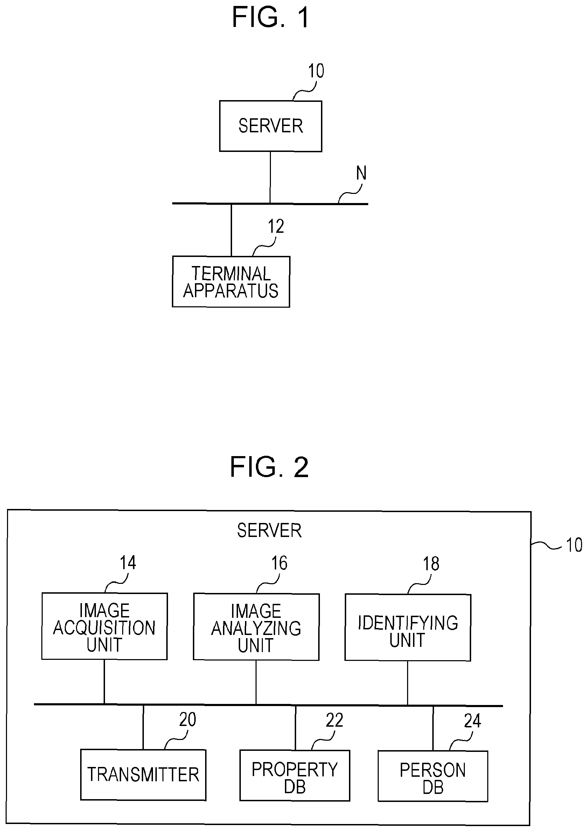

Referring to Fig. 1, an information processing system is described. Fig. 1 is a block diagram illustrating an example of a configuration of the information processing system.

The information processing system of the exemplary embodiment includes a server 10 and terminal apparatus 12. The number of servers 10 and the number of terminal apparatuses 12 are illustrated in Fig. 1 for exemplary purposes only. The information processing system may include multiple server 10. The information processing system may also include multiple terminal apparatuses 12.

Each of the server 10 and terminal apparatus 12 has a function of communicating with another apparatus. The communication may be wired communication using a cable or wireless communication. The wireless communication may be near-field radio communication or Wi-Fi (registered trademark). The wireless communication complying with other standards may also be employed. For example, the server 10 and terminal apparatus 12 may communicate with another apparatus via a communication network N, such as a localarea network (LAN) and the Internet.

The server 10 manages persons and objects excluding the persons in an associated form and identifies an owner of an object serving as an identification target and owned by an anonymous (unidentified) person.

The terminal apparatus 12 is a personal computer (PC), tablet PC, smart phone, wearable device (such as augmented reality (AR) glasses), or cell phone.

The configuration of the server 10 is described with reference to Fig. 2. Fig. 2 illustrates an example of the configuration of the server 10.

The server 10 includes an image acquisition unit 14, image analyzing unit 16, identifying unit 18, the transmitter 20, property database (DB) 22, and person DB 24.

The image acquisition unit 14 acquires image data. For example, the image data is transmitted from the terminal apparatus 12 to the server 10. The image acquisition unit 14 acquires the image data that is transmitted from the terminal apparatus 12 to the server 10. The image acquisition unit 14 may acquire image data stored on an apparatus, such as a file server (for example, a file server provided in cloud service), image data present over the Internet (for example, image data posted on a web site), or image data posted on a social network service (SNS).

The image analyzing unit 16 analyzes the image data acquired by the image acquisition unit 14. For example, the image analyzing unit 16 determines whether the image data represents persons and determines whether the image data represents objects excluding the persons. The image analyzing unit 16 also extracts from the image data images of the persons represented by the image data and images of the objects excluding the persons and identifies attributes of the persons and attributes of the objects. The "object" hereinafter refers to an object excluding a person.

The object serving as an analysis target to be analyzed by the image analyzing unit 16 may be any object. Examples of the object to be analyzed may include objects worn by humans (such as clothes, shoes, watches, glasses, hats, accessories, or wearable devices), objects used by humans (such as personal computers (PCs), smart phones, bags, or stationary). Objects other than these may also be an analysis target. For example, the examples of the analysis targets may include vehicles, such as cars or bicycles, home appliances, or real estate, such as buildings. The concept of the object may include living things excluding humans.

The attributes of person may include the name, sex, and family structure of the person. The attributes of person may also include profession and educational background.

The attributes of object may include the name and type of the object. The attribute of object may further include a product name and product code of the object.

The technique of extracting the image of a person and the image of an object may be any related-art image extraction technique.

As described below, the person DB 24 registers data on persons and based on data registered in the person DB 24, the image analyzing unit 16 identifies the attribute of a person represented by the image data acquired by the image acquisition unit 14. The image analyzing unit 16 may also identify the attribute of the person in accordance with data other than the data stored in the person DB 24. For example, the image analyzing unit 16 may identify the attribute of a person in accordance with data present over the Internet or data posted on an SNS. Using related-art technique to search for and detect persons, the image analyzing unit 16 may identify the attribute of the person. Image recognition artificial intelligence (AI) may also be employed.

The image analyzing unit 16 identifies the attribute of an object, employing a related-art technique to search for and detect the object. The image analyzing unit 16 may identify the attribute of the object in accordance with the data present over the Internet or the data posted on the SNS. Image recognition artificial intelligence (AI) may also be employed.

The identifying unit 18 identifies the owner of the object represented by the image data. For example, the image data representing the object serving as an identification target and owned by an anonymous owner is transmitted from the terminal apparatus 12 to the server 10 and the image acquisition unit 14 acquires the image data. The identifying unit 18 identifies the owner of the object represented by the image data. As described below, owner identification data used to identify the owner of each object is stored on a per object basis in the property DB 22. The identifying unit 18 identifies the owner of the object serving as the identification target in accordance with contents registered in the property DB 22.

The transmitter 20 transmits to an external apparatus, such as the terminal apparatus 12, data indicating results of analysis provided by the image analyzing unit 16 and data indicating results of identification provided by the identifying unit 18.

The property DB 22 stores data identifying owners of objects on a per object basis. For example, object identification data used to identify objects is associated with owner identification data used to identify owners on a per object basis. These pieces of data are registered in the property DB 22.

The object identification data may be data indicating a character string identifying an object (for example, a character string representing the name of the object, identification (ID) of the object, or a character string indicating the type of the object) or image data representing the object.

The owner identification data may be a character string identifying an owner (for example, a character string indicating the name of the owner or an ID of the owner) or image data representing the owner (for example, image data representing the face of the owner).

The owner of an object may be an actual owner of the object or a person simply using the object (for example, a person wearing or carrying the object) or a person occupying the object. The concept of the owner of the object may include a person who does not have legal ownership of the object but uses the object.

The identifying unit 18 receives the image data representing an object as an identification target and owned by an anonymous owner and identifies the owner of the object as the identification target in accordance with the image data and contents registered in the property DB 22. For example, if the object as the identification target represented by the image data is registered in the property DB 22 (if the object identification data identifying the object as the identification target is registered in the property DB 22), the identifying unit 18 identifies the owner identification data associated with the object identification data. In this way, the owner of the object as the identification target may thus be identified.

The person DB 24 registers data related to each person. For example, the person DB 24 registers, on a per person basis in an associated form, data indicating names and user IDs of persons and the image data representing faces of the persons. A group to which one or more persons belong may be determined and data related to each person belonging to the group may be registered in the person DB 24 on a per group basis. The groups may be families, companies, or departments or circles of each company. Individual persons without being grouped may also be registered in the person DB 24.

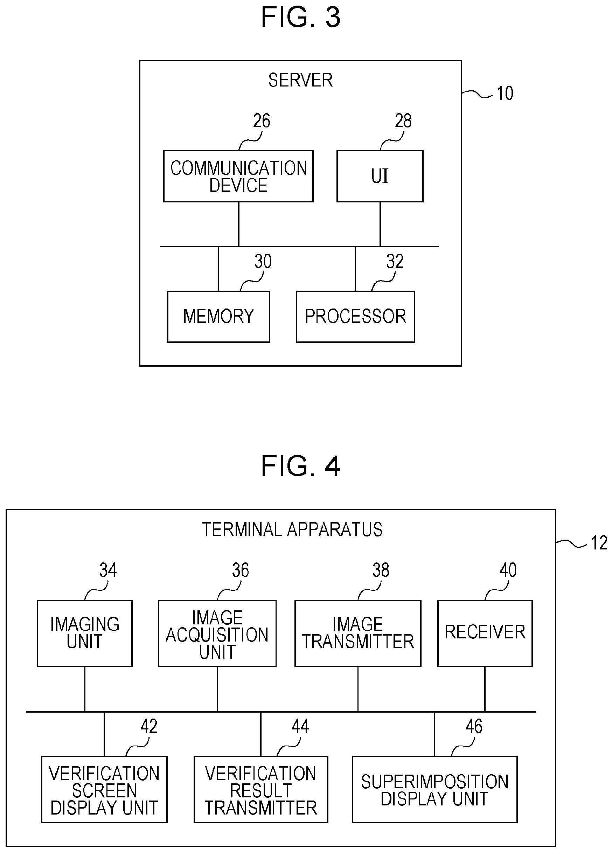

A hardware configuration of the server 10 is described with reference to Fig. 3. Fig. 3 illustrates an example of the hardware configuration of the server 10.

The server 10 includes a communication device 26, user interface (UI) 28, memory 30, and processor 32.

The communication device 26 includes one or more communication interfaces, each having a communication chip and a communication circuit, and has a function of transmitting or receiving information to or from another apparatus. The communication device 26 may have a wireless communication function or a wired communication function.

The UI 28 includes a display and input device. The display is a liquid-crystal display or electroluminescence (EL) display. The input device may include a keyboard, mouse, input keys and/or operation panel. The UI 28 may be a touch panel serving as both a display and input device.

The memory 30 includes one or more memory regions storing data. For example, the memory 30 is a hard disk drive (HDD), solid-state drive (SSD), one of a variety of memories (such as random-access memory (RAM), dynamic RAM, non-volatile RAM, or read-only memory (ROM)), one of other memories (such as optical disk), or a combination thereof.

The property DB 22 and person DB 24 may be implemented by the memory 30. The property DB 22 and person DB 24 may be included in an apparatus other than the server 10.

The processor 32 controls each element of the server 10. For example, the image acquisition unit 14, image analyzing unit 16, identifying unit 18, and transmitter 20 are implemented by the processor 32. Specifically, the processor 32 performs the functions of the image acquisition unit 14, image analyzing unit 16, identifying unit 18, and transmitter 20.

The configuration of the terminal apparatus 12 is described with reference to Fig. 4. Fig. 4 illustrates an example of the configuration of the terminal apparatus 12.

The terminal apparatus 12 includes an imaging unit 34, image acquisition unit 36, image transmitter 38, receiver 40, verification screen display unit 42, verification result transmitter 44, and superimposition display unit 46.

The imaging unit 34 generates the image data through photographing. For example, the imaging unit 34 may be implemented by a camera mounted on the terminal apparatus 12.

The image acquisition unit 36 acquires the image data. For example, the image acquisition unit 36 acquires the image data that is generated through photographing performed by the imaging unit 34. The image acquisition unit 36 may acquire image data stored on an apparatus, such as a file server, image data present over the Internet, image data posted on an SNS, image data stored on the terminal apparatus 12, or image data stored on a memory connected to the terminal apparatus 12.

The image transmitter 38 transmits to the server 10 the image data acquired by the image acquisition unit 36.

The receiver 40 receives data transmitted to the terminal apparatus 12. For example, the receiver 40 receives data transmitted from the server 10 to the terminal apparatus 12. If data indicating results of analysis provided by the image analyzing unit 16 is transmitted from the server 10 to the terminal apparatus 12, the receiver 40 receives the results of the analysis. If data indicating results of identification provided by the identifying unit 18 is transmitted from the server 10 to the terminal apparatus 12, the receiver 40 receives the data indicating the results of the identification.

The verification screen display unit 42 causes a display thereof to display a verification screen. The verification screen is used to ask a user to confirm an owner identified by the identifying unit 18. If a certain person is identified as an owner of a certain object by the identifying unit 18 (in other words, the object is identified as a property of the person), a screen used to inquire the user whether the object is the property of the person corresponds to an example of the verification screen.

When the user has performed verification on the verification screen, the verification result transmitter 44 transmits data indicating the results of the verification to the server 10. The processor 32 in the server 10 updates the data registered in the property DB 22 in response to the result of the verification.

The superimposition display unit 46 causes a display thereof to display an image responsive to the image data that represents the object as the identification target with an anonymous owner and thus causes the display to display information indicating the owner identified by the identifying unit 18 in superimposition on the image.

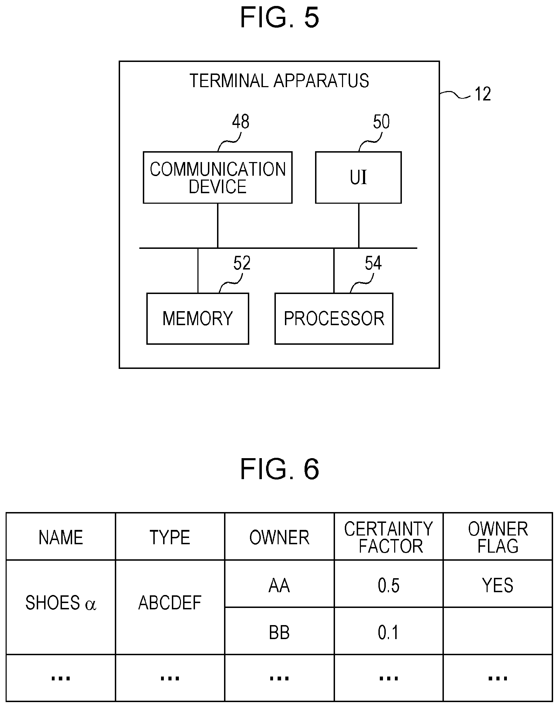

The hardware configuration of the terminal apparatus 12 is described with reference to Fig. 5. Fig. 5 illustrates an example of the hardware configuration of the terminal apparatus 12.

The terminal apparatus 12 includes, for example, a communication device 48, UI 50, memory 52, and processor 54.

The communication device 48 includes one or more communication interfaces, each having a communication chip and a communication circuit, and has a function of transmitting or receiving information to or from another apparatus. The communication device 48 may have a wireless communication function or a wired communication function.

The UI 50 includes a display and input device. The display is a liquid-crystal display or electroluminescence (EL) display. The input device may include a keyboard, mouse, input keys and/or operation panel. The UI 50 may be a touch panel serving as both a display and input device.

The memory 52 includes one or more memory regions storing data. For example, the memory 52 is a HDD, SSD, one of a variety of memories (such as random-access memory (RAM), dynamic RAM, non-volatile RAM, and read-only memory (ROM)), one of other memories (such as optical disk), or a combination thereof.

The processor 54 controls each element of the terminal apparatus 12. For example, the image acquisition unit 36, image transmitter 38, receiver 40, verification screen display unit 42, verification result transmitter 44, and superimposition display unit 46 are implemented by the processor 54. Specifically, the processor 54 performs the functions of the image acquisition unit 36, image transmitter 38, receiver 40, verification screen display unit 42, verification result transmitter 44, and superimposition display unit 46.

The property DB 22 is specifically described with reference to Fig. 6. Fig. 6 illustrates an example of the property DB 22.

Data indicating names of objects, data indicating types of the objects, data indicating owners of the objects, data indicating certainty factors, and data indicating owner flags are associated with each other on a per object basis in the property DB 22.

The data indicating the names of the objects and the data indicating the types correspond to an example of the object identification data. The data indicating the owners corresponds to an example of the owner identification data. The image data representing the objects may be registered as an example of the object identification data in the property DB 22. The image data representing the faces of the owners may be registered as an example of the owner identification data in the property DB 22.

The certainty factor is a value indicating the certainty at which a person associated with an object is likely to be an owner of the object. The certainty factor is a probability or a value corresponding to the probability at which the person is the owner of the object. The certainty factor is modified in response to the number of times by which the owner is identified by the identifying unit 18 or the number of times by which the object is detected from the image data. For example, (the number of times by which the owner is identified)/(the number of times by which the object is detected from the image data) may be defined as the certainty factor. The certainty factor may also be modified by the image data that represents together an object and a person. For example, if the image data represents together an object and a person, it is presumed that the person is the owner of the object and the certainty factor of the person with respect to the object is set to be higher.

An owner flag is information indicating the owner of the object. For example, a person having the highest certainty factor is associated with the owner flag. If the owner of the object is confirmed on the verification screen, the owner flag of the object is updated.

Referring to Fig. 6, owner AA and owner BB are associated with object "shoes **α.**" The certainty factor of the owner AA is 0.5 and the certainty factor of the owner BB is 0.1. In this case, the probability that the owner AA is the owner of the object "shoes **α**" is higher than the probability that the owner BB is the owner of the object "shoes **α**." The owner flag is associated with the owner AA.

The process of the exemplary embodiment is described in detail below.

The processor 32 in the server 10 receives the image data representing persons and objects excluding the persons (hereinafter referred to as "first image data"). The processor 32 registers in the property DB 22 a person represented by the first image data as an owner of an object represented by the first image data. For example, the processor 32 identifies an object represented by the first image data. The processor 32 identifies a person represented by the first image data by referring to data registered in the person DB 24 and thus determines that the person is the owner of the object. For example, the processor 32 identifies the person represented by the first image data by checking the image data representing the face of the person registered in the person DB 24 against the first image data. The processor 32 registers the object identification data on the identified object and the owner identification data on the identified person in an associated form in the property DB 22. The processor 32 also sets the certainty factor of the person with reference to the object to be higher.

The processor 32 receives image data representing an object as an identification target with an anonymous owner (hereinafter referred to as "second image data"). The processor 32 identifies the owner of the object as the identification target in accordance with the second image data and contents registered in the property DB 22. For example, the processor 32 detects an object represented by the second image data and identifies the owner identification data associated with the object identification data on the detected object. In this way, the owner of the object is identified.

The first image data and second image data may be image data generated when the camera of the terminal apparatus 12 performs photographing, image data stored on an apparatus, such as a file server, image data present over the Internet, image data posted on an SNS, or image data stored on the terminal apparatus 12. The first image data and second image data may be image data stored on a memory region used by the user (for example, a folder or a shared folder on the file server).

The first image data is generated when a person and an object are together photographed by the camera of the terminal apparatus 12 to register the person and object in the property DB 22. The image data over the Internet, the image data posted on the SNS, or the image data stored in the folder on the file server may be transmitted as the first image data to the server 10. If the user specifies a folder on the file server as the folder storing the first image data, the image data stored in the folder is transmitted as the first image data to the server 10.

The second image data is generated when the camera of the terminal apparatus 12 photographs the object to identify the owner of the object. The image data over the Internet, the image data posted on the SNS, or the image data stored in the folder on the file server may be transmitted as the second image data to the server 10. If the user specifies a folder on the file server as the folder storing the second image data, the image data stored in the folder is transmitted as the second image data to the server 10.

When the object and owner are registered in the property DB 22, the processor 32 in the server 10 may transmit to the terminal apparatus 12 data of a screen that is used to determine whether an object represented by the first image data is an owner of the object as an identification target and may cause the display of the terminal apparatus 12 to display the screen. If a user has provided an instruction to register on the screen, the processor 32 registers the person as the owner of the object in the property DB 22 with the object and person in association with each other. Specifically, the processor 32 registers the object identification data on the object and the owner identification data on the person in an associated form in the property DB 22.

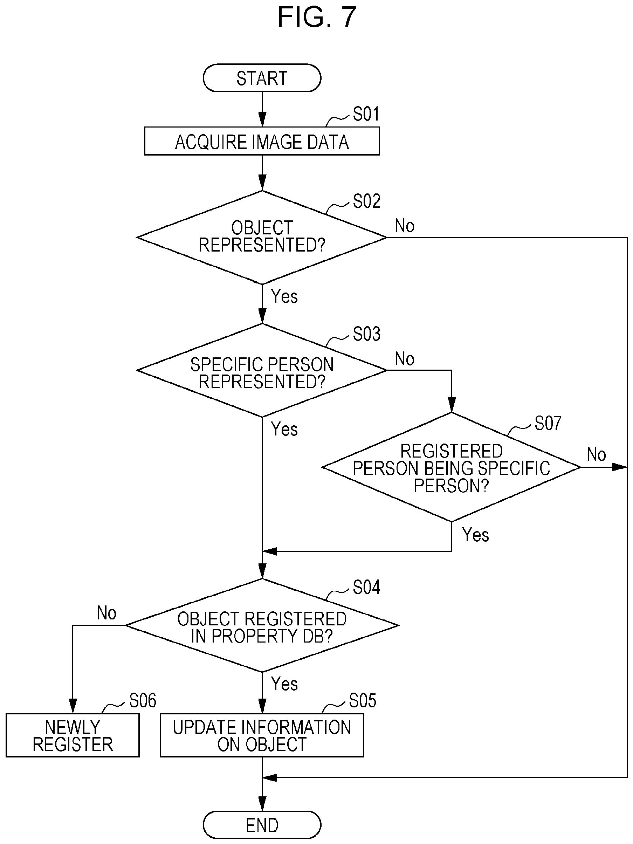

A process of registering the object in the property DB 22 is described with reference to Fig. 7. Fig. 7 is a flowchart illustrating the flow of the process.

The processor 32 in the server 10 acquires the image data (step S01). The processor 32 may acquire the image data transmitted from the terminal apparatus 12 to the server 10, the image data present over the Internet, the image data stored on an apparatus, such as a file server, or the image data posted on the SNS.

When the user specifies the image data serving as a target of a registration process by operating the terminal apparatus 12 and instructs the registration process to be performed, the processor 54 in the terminal apparatus 12 transmits data indicative of the instruction to the server 10. The execution of the registration process may be instructed by using application software for the registration process or by using a web site for the registration process.

The processor 32 in the server 10 acquires the image data specified by the user and performs operation in S02 and subsequent operations in response to the instruction. The user may specify a memory region (such as a folder) that stores the image data serving as the target of the registration process. For example, if the user specifies an address of a folder (such as uniform resource locator (URL)), the processor 32 acquires the image data stored in the folder. For example, if a memory region shared by the family of the user (for example, a shared folder) is specified, the processor 32 acquires the image data stored in the shared folder. The processor 32 may acquire all the image data stored in the shared folder or image data specified by the user.

The processor 32 may perform the registration process without an instruction from the user. For example, the processor 32 may periodically acquire the image data from a specified memory region and perform the operation in S02 and subsequent operations.

The image data acquired by the processor 32 in S01 may also be referred to as "image data as the registration target."

The processor 32 in the server 10 determines whether the image data as the registration target represents an object (S02). If the image data as the registration target does not represent an object (no path in S02), the registration process ends.

The type of an object serving as a registration target may be predetermined and the processor 32 may determine whether an object belonging to the type is represented by the image data as the registration target. In this way, the registration process is performed on an object belonging to the predetermined type and is not performed on an object not belonging to the predetermined type. For example, the type of the object worn by humans or the type of the object used by humans are predetermined as the type of the object for the registration process and walls serving as the background are not predetermined as an object for the registration process.

The object represented by the image data as the registration target is referred to as an "object as the registration target."

If the image data as a registration target represents an object (yes path in S02), the processor 32 in the server 10 determines whether a specific person is represented by the image data as the registration target (S03). The specific person is a person belonging to a specific group. The specific group may be a group to which a user having provided an instruction to perform the registration process belongs to or a group to which the user does not belong to. For example, when the user provides the instruction to perform the registration process, the user may specify a specific group.

By checking the image data representing the face of a person registered in the person DB 24 against the image data as the registration target, the processor 32 in the server 10 identifies the person represented by the image data as the registration target. Since the image data representing the face of the person is associated with the name and user ID of the person, the name and user ID of the identified person are identified. Specifically, by checking the image data registered in the person DB 24 and representing the face of the person belonging to the specific group against the image data as the registration target, the processor 32 identifies the person represented by the image data as the registration target and determines whether the person is the specific person.

For example, the specific group is a family of the user who has provided the instruction to perform the registration process and the specific person is a person belonging to the family. By checking the image data representing the face of the person belonging to the family of the user registered in the person DB 24 against the image data as the registration target, the processor 32 in the server 10 determines whether the person belonging to the family of the user (an example of the specific person) is represented by the image data as the registration target.

If the specific person is represented by the image data as the registration target (yes path in S03), the process proceeds to S04. For example, if a person belonging to the family of the user having provided the instruction to perform the registration process is represented by the image data as the registration target, the process proceeds to S04.

The image data as the registration target representing the specific person and object corresponds to an example of the first image data.

The processor 32 in the server 10 determines whether the object represented by the image data as the registration target (namely, the object as the registration target) is registered in the property DB 22 (S04).

If the image data representing each object is registered in the property DB 22, the processor 32 checks the object as the registration target represented by the image data as the registration target against the object represented by each piece of the image data registered in the property DB 22 and thus determines whether the object as the registration target is registered in the property DB 22. If the image data representing the object as the registration target is registered in the property DB 22, the processor 32 determines that the object as the registration target is registered. If the image data representing the object as the registration target is not registered in the property DB 22, the processor 32 determines that the object as the registration target is not registered in the property DB 22.

An object may be represented by the image data registered in the person DB 24 and registered in the property DB 22. The object registered in the property DB 22 and the object represented by the image data registered in the person DB 24 may be associated with each other as the same object. In such a case, the processor 32 may check the object represented by the image data registered in the person DB 24 against the object as the registration target in order to determine whether the object as the registration target is registered in the property DB 22.

The technique of checking the objects may be any related-art technique. For example, the processor 32 may check one object against another by extracting the feature of an object from each piece of the image data and comparing the extracted features with each other.

If the object as the registration target is registered in the property DB 22 (yes path in S04), the processor 32 in the server 10 updates the information on the object as the registration target registered in the property DB 22 (S05).

If the object as the registration target and the specific person identified in S03 are registered in association with each other in the property DB 22, the processor 32 sets to be higher the certainty factor of the specific person with respect to the object as the registration target. For example, the processor 32 sets the certainty factor to be higher by a predetermined value.

If the object as the registration target and the specific person identified in S03 are not registered in association with each other in the property DB 22, the processor 32 registers, in an associated form in the property DB 22, the object identification data on the object as the registration target and data used to identify the specific person. The data used to identify the specific person is data indicating the name and user ID of the person identified in step S02 and is registered in the property DB 22 as the owner identification data.

If the object as the registration target is not registered in the property DB 22 (no path in S04), the processor 32 in the server 10 registers the object as the registration target and the specific person in association with each other in the property DB 22 (S06). Specifically, the processor 32 registers the specific person as the owner of the object as the registration target in the property DB 22.

Specifically, the processor 32 registers, in an associated form in the property DB 22, the object identification data on the object as the registration target and the data identifying the specific person (specifically, the owner identification data). The image data representing the object as the registration target may be registered in the property DB 22 as the object identification data. The image data representing the face of the specific person may be registered in the property DB 22.

If the specific person is not represented by the image data as the registration target (no path in S03), the processor 32 in the server 10 determines whether a registered person is the specific person (S07). The registered person is the user who has provided the instruction to perform the registration process. For example, the processor 32 determines whether the registered person is a member of the family serving as an example of the specific group.

If the registered person is the specific person (yes path in S07), the process proceeds to step S04. If the registered person is not the specific person (no path in S07), the process ends.

As described above, the data related to the object represented by the first image data is registered in the property DB 22. For example, the object and person represented by the first image data are registered in association with each other in the property DB 22.

The operations in steps S03 and S07 in Fig. 7 are thus performed. Alternatively, the operations in steps S03 and S07 in Fig. 7 may not necessarily be performed. In such a case, regardless of whether the object represented by the image data as the registration target is the specific person, the processor 32 in the server 10 determines that the person represented by the image data as the registration target is the owner of the object represented by the image data as the registration target and registers the object and person in association with each other in the property DB 22. Specifically, regardless of whether the specific person is represented or not, the image data representing the person and object corresponds to the first image data.

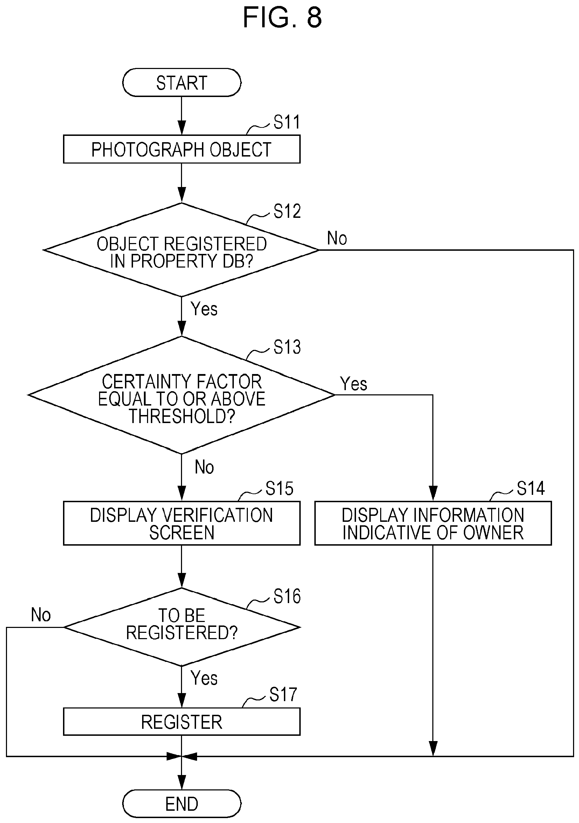

A process identifying the owner of the object is described below with reference to Fig. 8. Fig. 8 is a flowchart illustrating the flow of the process.

The user photographs an object using the camera of the terminal apparatus 12 (S11). For example, the user photographs an object as an identification target owned by an anonymous owner through the camera of the terminal apparatus 12. In this way, the second image data representing the object as the registration target is generated. The second image data is transmitted from the terminal apparatus 12 to the server 10. The image data stored on the terminal apparatus 12 as a result of photographing may be specified by the user as the second image data and transmitted from the terminal apparatus 12 to the server 10. The image data stored on an apparatus, such as the file server, may be specified by the user as the second image data and transmitted to the server 10.

The processor 32 in the server 10 receives and analyzes the second image data in order to determine whether the object represented by the second image data is registered in the property DB 22 (S12).

If the image data on each object is stored as the object identification data in the property DB 22, the processor 32 checks the image data on each object registered in the property DB 22 against the second image data in order to determine whether the object represented by the second image data is registered in the property DB 22.

If an object is represented by the image data registered in the person DB 24 and registered in the property DB 22, the object registered in the property DB 22 and the object represented by the image data registered in the person DB 24 may be associated with each other as the same object. By checking the object represented by the image data registered in the person DB 24 against the object represented by the second image data, the processor 32 may determine whether the object represented by the second image data is registered in the property DB 22.

If the object represented by the second image data is not registered in the property DB 22 (no path in S12), the process ends.

If the object represented by the second image data is registered in the property DB 22 (yes path in S12), the processor 32 in the server 10 determines whether the certainty factor of the owner registered in the property DB 22 associated with the object is equal to or above a threshold (S13). If multiple owners are associated with the object, the processor 32 determines whether the certainty factor of each owner is equal to or above the threshold. The threshold is predetermined. The threshold may be modified by the user. The processor 32 in the server 10 identifies a person having a certainty factor equal to or above the threshold as the owner of the object as the identification target.

If the certainty factor is equal to or above the threshold (yes path in S13), the processor 32 transmits to the terminal apparatus 12 information indicating an owner having a certainty factor equal to or above the threshold and causes the display of the terminal apparatus 12 to display the information indicating the owner (S14). The information indicating the owner may be information that is obtained from the owner identification data registered in the property DB 22. For example, the information indicating the owner is the name or user ID of the owner.

A second image based on the second image data is displayed on the display of the terminal apparatus 12. When the user photographs the object as the registration target through the camera of the terminal apparatus 12, the second image based on the second image data is displayed on the display of the terminal apparatus 12. The processor 32 transmits the information indicating the owner to the terminal apparatus 12 and causes the display of the terminal apparatus 12 to display the information indicating the owner in superimposition on the second image.

If multiple owners having the certainty factors equal to or above the threshold are registered in the property DB 22, the processor 32 may cause the display of the terminal apparatus 12 to display information indicating each of the owners in superimposition on the second image.

In another example, the processor 32 may cause the display of the terminal apparatus 12 to display information indicating an owner having the highest certainty factor, among the owners, in superimposition on the second image. In yet another example, the owners may be arranged in the order of high to low certainty factor and the processor 32 may cause the display of the terminal apparatus 12 to display information on an owner having a predetermined order of certainty factor in superimposition on the second image.

If the certainty factor is lower than the threshold (no path in S13), the processor 32 in the server 10 transmits to the terminal apparatus 12 data indicating the verification screen and causes the display of the terminal apparatus 12 to display the verification screen (S15).

The verification screen displays information indicating each person that is registered in association with an object serving as an identification target in the property DB 22. The certainty factor of each person may be displayed on the verification screen. The owner of the object as the registration target is specified on the verification screen by the user.

When the user provides a registration instruction by specifying a person as the owner of the object as the registration target (yes path in S16), the registration process is performed (S17). Specifically, the information indicating the person specified by the user is transmitted from the terminal apparatus 12 to the server 10, and the processor 32 in the server 10 registers the specified person as the owner of the object as the registration target in the property DB 22.

If no person is specified as the owner of the object as the registration target (no path in S16), the owner registration is not performed and the process ends.

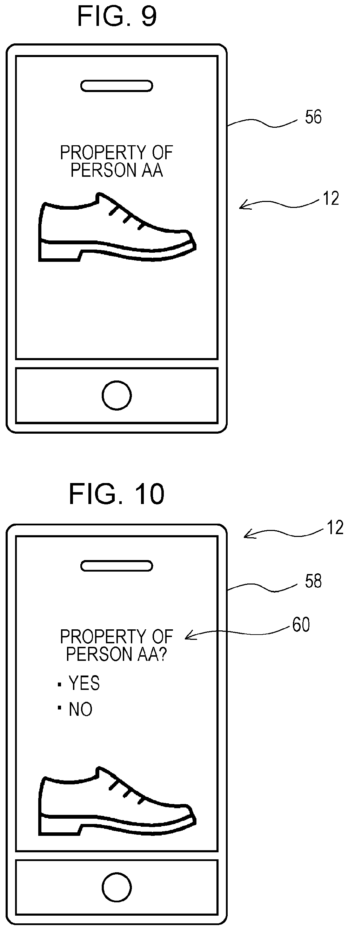

A display example of information indicative of an owner is illustrated with reference to Fig. 9. Fig. 9 illustrates a screen 56 that is displayed on the display of the terminal apparatus 12.

The screen 56 displays an object serving as an identification target (for example, shoes). For example, through the camera of the terminal apparatus 12, the user photographs an object owned by an anonymous owner as an object serving an identification target. Through photographing, the second image data is generated and the second image based on the second image data is displayed on the screen 56.

The second image data representing the object as the registration target is transmitted from the terminal apparatus 12 to the server 10. The processor 32 in the server 10 identifies the owner of the object as the registration target by executing the process illustrated in Fig. 8.

Referring to Fig. 9, person AA is identified as a person registered in association with the object as the registration target in the property DB 22 and has a certainty factor equal to or above the threshold. Information indicating the person AA is transmitted from the server 10 to the terminal apparatus 12 and displayed in superimposition on the second image.

If multiple persons having certainty factors equal to or above the threshold are registered in the property DB 22, information indicating a person having the highest certainty factor (for example, the person AA) may be displayed in superimposition on the second image.

Although persons associated with the object as the registration target are registered in the property DB 22, no person having a certainty factor equal to or above the threshold may not be registered in the property DB 22. In such a case, the verification screen is displayed on the display of the terminal apparatus 12.

Fig. 10 illustrates a verification screen 58. Data representing the verification screen 58 is transmitted from the server 10 to the terminal apparatus 12 and then displayed on the display of the terminal apparatus 12.

The verification screen 58 displays the second image based on the second image data and information inquiring the user of the owner. For example, a message 60 inquiring the user of the owner is displayed on the verification screen 58.

Referring to Fig. 10, the person AA is registered in association with the object as the registration target in the property DB 22 but the certainty factor of the person AA is lower than the threshold. The message 60 is thus displayed on the verification screen 58 in order to inquire the user whether the object as the registration target is the property of the person AA.

If a yes button is pressed on the verification screen 58, data indicating a registration instruction is transmitted from the terminal apparatus 12 to the server 10. In response to the instruction, the processor 32 in the server 10 sets to be higher the certainty factor of the person AA with respect to the object as the registration target. The processor 32 may attach an owner flag to the person AA.

When the user presses a no button on the verification screen 58, data indicating that the object as the registration target is not the property of the person AA is transmitted from the terminal apparatus 12 to the server 10. The processor 32 in the server 10 sets to be lower the certainty factor of the person AA with respect to the object as the registration target.

If multiple persons are registered in association with the object as the registration target in the property DB 22, information indicating each of the persons may be displayed on the verification screen 58. In such a case, when the user provides the registration instruction by specifying one of the persons, the processor 32 in the server 10 may set the certainty factor of the specified person to be higher or associate the owner flag to the specified person.

In the example illustrated in Figs. 8 through 10, the person having the certainty factor equal to or above the threshold is identified as an owner and the information indicating the person is displayed on the display of the terminal apparatus 12. In another example, one or more persons registered in association with the object as the registration target in the property DB 22 may be identified as owners of the object as the registration target and information indicating the one or more persons may be displayed in superimposition on the second image on the display of the terminal apparatus 12.

Other exemplary embodiments are described below.

In response to the results of the registration based on the first image data, the processor 32 in the server 10 may update the certainty factor of each person registered in the property DB 22. For example, when objects and persons are registered in the property DB 22, the processor 32 may set to be higher the certainty factor of a person that is represented together with an object by the first image data.

In response to results of identification based on the second image, the processor 32 in the server 10 may update the certainty factor of each person registered in the property DB 22. For example, the processor 32 sets to be higher the certainty factor of a person that is identified as an owner of the object as the registration target represented by the second image data.

For example, shoes **α** are registered in the property DB 22 as an example of the object, and shoes **α** and persons AA and BB are represented by the first image data. The shoes **α** and the person AA are registered in association with each other in the property DB 22 and the shoes **α** and the person BB are registered in association with each other in the property DB 22. At this phase, the certainty factors of the persons AA and BB with respect to the shoes **α** are equal (for example, 0.5).

If the registration process is performed on the shoes **α** using the first image data representing the shoes **α** and person AA, the processor 32 sets to be higher the certainty factor of the person AA with respect to the shoes **α**. Alternatively, instead of modifying the certainty factor of the person AA, the processor 32 may set the certainty factor of the person BB to be lower.

If the owner of the shoes **α** is identified using the second image data representing the shoes **α** as the object as the registration target, the processor 32 sets the certainty factor of the owner to be higher. For example, if the person AA is identified as the owner of the shoes **α**, the processor 32 sets the certainty factor of the person AA to be higher.

Multiple persons may be represented by the first image data. Also, multiple objects may be represent by the first image data. The registration process with multiple persons or objects represented by the first image data is described below.

If multiple persons and objects are represented by the first image data, the processor 32 in the server 10 registers each of the objects and each of the persons in association with each other in the property DB 22.

For example, if the persons AA and BB and objects **β** and **γ** are represented by the first image data, the processor 32 registers the object **β** and each of persons AA and BB in association with each other in the property DB 22 and the object **γ** and each of persons AA and BB in association with each other in the property DB 22.

In such a case, the processor 32 may determine a person as the owner of the object in accordance with a distance between each person represented by the first image data and the object represented by the first image data and may register the determined person and the object in association with each other in the property DB 22. The distance is between the person and the object in a first image based on the first image data (for example, a value counted in the number of pixels).

The processor 32 calculates a distance AA between the object **β** and person AA and a distance BB between the object β and person BB in the first image and determines the owner of object **β**. The same is true of the object **γ**.

The processor 32 may register a person having the shortest distance to the object in the first image as the owner of the object in the property DB 22. Specifically, the processor 32 registers in the property DB 22 the person closest to the object as the owner of the object. If the distance AA is shorter than the distance BB, specifically, if the person AA is closer to object **β** than the person BB in the first image, the processor 32 registers the person AA as the owner of the object **β** in the property DB 22. Alternatively, the processor 32 may register each of the persons AA and BB as the owner of object **β** and set the certainty factor of the person AA to be higher than the certainty factor of the person BB.

The processor 32 may register a person represented by the first image data as the owner of the object **β** in the property DB 22. The person represented by the first image data may be a person carrying the object **β**, a person wearing the object **β**, or a person using the object **β**.

The cases where the exemplary embodiment is implemented are described below.

If an owner of washed and folded clothes is not known at home, photographing the clothes may identify the owner.

In another case, the owner of a ball left at a location, such as in a park, is not known, photographing the ball may identify the owner.

In yet another case, a user may photograph a product when purchasing the product in a store. If a product of the same type of the photographed product is registered in the property DB 22, information indicating the owner of that product may be displayed on the display of the terminal apparatus 12. In this way, before purchasing the product, the user may determine whether the product is owned by a member of the user family. When an object represented by the first image data is registered in the property DB 22, a person other than a person represented by the first image data may also be registered in the property DB 22.

Part or whole of the processes of the exemplary embodiment (for example, the process of registering the object and the process of identifying the owner of the object) may be performed by the processor 54 in the terminal apparatus 12.

The function of each of the server 10 and terminal apparatus 12 may be implemented by a combination of hardware and software. For example, the function of each of the server 10 and terminal apparatus 12 is implemented by the processor when the processor reads a program from the memory in each apparatus and executes the read program. The program may be loaded to the memory via a recording medium, such as a compact disk (CD) or digital versatile disk (DVD).

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
receive first image data representing persons and objects excluding the persons;
register a person represented by the first image data as an owner of an object represented by the first image data;
receive second image data that represents an object serving as an identification target and owned by an owner that is not identified; and
in accordance with the second image data and contents that are registered, identify the owner of the object serving as the identification target.

2. The information processing apparatus according to Claim 1, wherein a second image based on the second image data is displayed on a display, and
wherein the processor is configured to cause the display to display information indicating the identified owner in superimposition on the second image.

3. The information processing apparatus according to any one of Claims 1 and 2, wherein the processor is configured to, in accordance with the second image data and the registered contents, identify, as the owner of the object serving as the identification target, a person having a certainty factor as the owner of the object serving as the identification target equal to or above a threshold.

4. The information processing apparatus according to Claim 3, wherein the processor is configured to update the certainty factor in accordance with identification results that are based on one or more pieces of the second image data.

5. The information processing apparatus according to any one of Claims 3 and 4, wherein the processor is configured to update the certainty factor in accordance with registration results that are based on one or more pieces of the first image data.

6. The information processing apparatus according to any one of Claims 1 through 5, wherein the processor is configured to, if a plurality of persons are represented by the first image data, register an owner of the object represented by the first image data, in accordance with a distance between each of the persons represented by the first image data and the object represented by the first image data.

7. The information processing apparatus according to Claim 6, wherein the processor is configured to register, as the owner of the object represented by the first image data, a person at a location closest to the object represented by the first image data.

8. A program causing a computer to execute a process for processing information, the process comprising:
receiving first image data representing persons and objects excluding the persons;
registering a person represented by the first image data as an owner of an object represented by the first image data;
receiving second image data that represents an object serving as an identification target and owned by an owner that is not identified; and
in accordance with the second image data and contents that are registered, identifying the owner of the object serving as the identification target.

9. An information processing method comprising:
receiving first image data representing persons and objects excluding the persons;
registering a person represented by the first image data as an owner of an object represented by the first image data;
receiving second image data that represents an object serving as an identification target and owned by an owner that is not identified; and
in accordance with the second image data and contents that are registered, identifying the owner of the object serving as the identification target.
